**Europäisches Patentamt**

**European Patent Office**

**Office européen des brevets**

(19)

(11) Veröffentlichungsnummer: **0 254 137**
**B1**

(12) # EUROPÄISCHE PATENTSCHRIFT

(45) Veröffentlichungstag der Patentschrift:
19.04.89

(51) Int. Cl.⁴: **B01D 15/04**, B01D 53/34

(21) Anmeldenummer: 87109869.5

(22) Anmeldetag: 08.07.87

(54) **Verfahren zur Verhinderung der Korrosion von Apparateteilen.**

(30) Priorität: 22.07.86 DE 3624768

(43) Veröffentlichungstag der Anmeldung:
27.01.88 Patentblatt 88/4

(45) Bekanntmachung des Hinweises auf die Patenterteilung:
19.04.89 Patentblatt 89/16

(84) Benannte Vertragsstaaten:
AT BE CH DE FR LI NL SE

(56) Entgegenhaltungen:
DE-U- 8 203 949

PATENT ABSTRACTS OF JAPAN, Band 1,
Nr. 17 (C-76)[917], 23. März 1977; & JP - A
- 51 132 181 (EBARA INFIRUKO K.K.) 17.11.1976
PATENT ABSTRACTS OF JAPAN, Band 5,
Nr. 8 (C-39)[680], 20. Januar 1981; & JP - A
- 55 134 647 (SUMITOMO BAKELITE K.K.) 20.10.1980

(73) Patentinhaber: **Linde Aktiengesellschaft,
Abraham-Lincoln-Strasse 21, D-6200 Wiesbaden(DE)**

(72) Erfinder: **Krebs, Ernst, Holzwiesenstrasse 15,
D-8000 München 83(DE)**
Erfinder: **Baur, Karl, Dr. rer. nat., Forstenrieder Weg 50,
D-8023 Baierbrunn(DE)**
Erfinder: **Schliebener, Claus, Dr. rer. nat.,
Hugo-Hofmann-Strasse 36, D-8021 Strasslach(DE)**

(74) Vertreter: **Schaefer, Gerhard, Dr., Linde
Aktiengesellschaft Zentrale Patentabteilung,
D-8023 Höllriegelskreuth(DE)**

## Beschreibung

Die Erfindung betrifft ein Verfahren zur Verhinderung der Korrosion von Apparateteilen durch Säure-Anionen im Zuge der Entfernung von $SO_2$ aus Abgasen durch Wäsche mit einem physikalisch wirkenden Lösungsmittel, das nach Aufnahme von $SO_2$ regeneriert und wiederverwendet wird.

Das Problem der Entfernung von $SO_2$ aus Verbrennungsgasen gewinnt zunehmend an Bedeutung. Diese Verbrennungs- oder Rauchgase entstehen in der Regel durch Verbrennung von kohlenstoffhaltigen Brennstoffen, wie Öl, Kohle oder Erdgas. Die Entfernung von Schwefeloxiden, insbesondere $SO_2$, kann dabei in günstiger Weise durch Wäsche mit einem Absorptionsmittel durchgeführt werden. Ein derartiges Verfahren ist beispielsweise in Linde-Berichte aus Technik und Wissenschaft, 57, 1985, Seite 3 bis 13 beschrieben.

Das Rauchgas wird bei dem bekannten Verfahren abgekühlt und vorgereinigt. Diese Vorreinigung wird zweckmäßig durch eine Wasservorwäsche erreicht, in der das Rauchgas gleichzeitig soweit abgekühlt wird, wie es die Kühlwasserbedingungen erlauben. In der Wasservorwäsche werden Halogenide, wie HCl und HF, vollständig, $SO_3$ zum größten Teil ausgewaschen.

Darüber hinaus findet auch eine Feinentstaubung statt. Das vorgewaschene Gas enthält damit keine Bestandteile mehr, die Störungen in der nachfolgenden eigentlichen $SO_2$-Wäsche bewirken könnten. In der $SO_2$-Wäsche wird bei dem bekannten Verfahren ein Lösungsmittel eingesetzt, das als Hauptkomponente Tetraätyhlenglykoldimethyläther enthält.

Sollte die Wasservorwäsche aus irgendwelchen Gründen nicht zuverlässig genug arbeiten oder im Falle von Betriebsstörungen, so kann z.B. Chlorid in das Lösungsmittel eingetragen werden. An Werkstoffen, die gegen beispielsweise Chlorid nicht resistent sind, kann dann Lochfraß oder Spaltkorrosion auftreten und zur schnellen Zerstörung des Werkstoffes führen.

Der vorliegenden Erfindung liegt daher die Aufgabe zugrunde, Säure-Anionen aus dem Lösungsmittel zu entfernen, wenn diese beispielsweise bei Betriebsstörungen in das Lösungsmittel gelangt sind.

Diese Aufgabe wird erfindungsgemäß dadurch gelöst, daß die Säure-Anionen mittels eines Ionenaustauschers aus dem Lösungsmittel entfernt werden.

Untersuchungen haben ergeben, daß Anionen starker Säuren wie Chlorid-, Fluorid-, Sulfat-Ionen auf einfache Weise aus organischen Lösungen mittels Ionenaustauscher entfernt werden können. Nach vollständiger Beladung mit den Anionen kann der Ionenaustauscher regeneriert werden.

Als besonders günstig hat sich die Verwendung eines schwachbasischen Ionenaustauschers erwiesen. Die schwachbasische Aminogruppe des Harzes reagiert beispielsweise gemäß
Harz-$NR_2$ + HCl → (Harz-$NR_2$H)$^+$ + Cl$^-$.

Die Regenerierung eines derartigen handelsüblichen Ionentauschers kann z.B. mit wäßriger Natronlauge durchgeführt werden.

Im Falle des physikalisch wirkenden $SO_2$-Lösungsmittels ergab sich bei Untersuchungen, daß die nutzbare Volumenkapazität des handelsüblichen Ionentauscherharzes für die Säure-Anionen nur einem Viertel der vom Hersteller angegebenen Kapazität entsprach. Durch Zugabe von Wasser wurde überraschenderweise die Kapazität des Ionentauscherharzes erheblich erhöht. Gibt man etwa einem Lösungsmittel, das bereits 5 Gew.-% Wasser – entsprechend einer molaren Konzentration von 38% – enthält, weitere 10 Gew.-% Wasser – entsprechend 67 Mol-% – zu, so erhöht sich in unerwarteter Weise die Kapazität des Ionentauscherharzes gegenüber dieser Mischung auf 2/3 des für wäßrige Lösungen geltenden Wertes. Daraus ergibt sich, daß in zweckmäßiger Weiterbildung des Erfindungsgedankens die Anionenentfernung in Gegenwart von 10 bis 25 Gew.-% Wasser bezogen auf das Lösungsmittel durchgeführt wird.

Der geschilderte Effekt läßt sich in einer großtechnischen Anlage ausnützen, wenn man gemäß einer weiteren Ausführungsform des erfindungsgemäßen Verfahrens die Säure-Anionen aus dem regenerierten Lösungsmittel, d.h. nach der Desorption des mit $SO_2$ beladenen Lösungsmittels, entfernt.

Da die störenden, korrosiv wirkenden Säure-Anionen üblicherweise nicht in das Lösungsmittel gelangen, sondern nur in Ausnahmefällen, genügt es nach einer bevorzugten Ausführungsform des Erfindungsgedankens, den Anionentauscher diskontinuierlich zuzuschalten. Dies bedeutet insbesondere, daß der Ionentauscher nur in Störfällen in Betrieb genommen wird.

Die Erfindung ist auf physikalisch wirkende Lösungsmittel anwendbar, die sich zur Absorption von $SO_2$ aus Rauchgasen oder anderen Abgasen eignen, wie beispielsweise Äthylenglykole und deren länger kettige Homologe, wie Polyäthylenglykole auf Äthylenglykoldialkyläther und deren länger kettige Homologe, wie Polyäthylenglykolalkyläther.

Im folgenden sei das erfindungsgemäße Verfahren anhand eines schematisch dargestellten Ausführungsbeispiels näher erläutert.

Über Leitung 1 treten 80.000 Nm³/h $SO_2$-haltiges Rauchgas in eine Waschsäule 2 ein. Die Waschsäule 2 enthält zwei Waschabschnitte. Der erste, unterste besteht aus einer Wasservorwäsche mit einem geschlossenen Wasserkreislauf 3. Die Wasservorwäsche dient zum einen zum Abkühlen des Rauchgases, wobei die aus dem Rauchgas aufgenommene Wärme über einen Wärmetauscher 4 an Kühlwasser abgegeben wird. Die Wasservorwäsche bewirkt andererseits auch eine wirkungsvolle Vorreinigung. Im Rauchgas sind beispielsweise 4 Nm³/h HCl mit eingetragen. An einem Prallblech 5 scheiden sich 80% des HCl, d.h. 3,2 Nm³/h ab und werden über Leitung 6 abgeschlämmt. In die Wasserwäsche gelangen so-

mit noch 0,8 Nm³/h HCl (= 35,7 mol/h = 1268 g Cl⁻/h). Dies bedeutet eine Konzentration im Kreislaufwasser von 1268 g Cl⁻/h/3200 l/h Abschlämmung = 0,4 g Cl⁻/l).

Aus der Wasserwäsche steigt das auf Umgebungstemperatur abgekühlte Gas durch einen Kaminboden in die eigentliche Wäsche, in dem die Entschwefelung stattfindet. Beim Aufsteigen des Gases kann Wasser aus dem Wasserkreislauf mitgerissen werden, wenn die Wasserwäsche bei einem Störfall schäumt oder staut.

Über Leitung 7 wird regeneriertes Lösungsmittel zugeführt, das im Gegenstrom zu dem aufsteigenden Rauchgas aus diesem das SO₂ absorbiert. Am Kopf der Waschsäule 2 wird über Leitung 8 gereinigtes Gas abgezogen.

Das mit SO₂ beladene Lösungsmittel wird über Leitung 9 abgezogen, in einem Wärmetauscher 10 gegen regeneriertes Lösungsmittel angewärmt und einer Waschregeneriersäule 11 im oberen Bereich aufgegeben. Über eine Sumpfheizung 12 wird das im Lösungsmittel vorhandene SO₂ ausgetrieben und verläßt die Regeneriersäule 11 am Kopf über Leitung 13.

In dem von SO₂ befreiten Lösungsmittel, das vom Sumpf der Regeneriersäule 11 über Leitung 14 abgezogen wird, ist nunmehr noch Chlorid sowie gebildete Schwefelsäure enthalten. Um diese Anionen zu entfernen, wird das regenerierte Lösungsmittel nach Abkühlung im Wärmetauscher 10 über ein Ventil 15 einem Ionentauscher 16 zugeführt, der ein schwachbasisches Harz aufweist. Das Harz belädt sich bei Überleiten des Lösungsmittels mit den Anionen, so daß über Leitung 17 mit Ventil 18 und Pumpe 19 HCl und sulfatfreies Lösungsmittel abgezogen werden kann, das über Leitung 7 zurück in die Wäsche geführt wird. Über Leitung 20 kann der Ionentauscher mittels Natronlauge regeneriert werden, die über Leitung 21 zusammen mit den Anionen abgezogen wird.

Die beim Störfall oder in Spuren oder kontinuierlich eingetragene Menge Cl-Ionen muß entfernt werden. In dem Lösungsmittel sind überdies 20 mval Schwefelsäure pro Liter Lösungsmittel enthalten, die ebenfalls entfernt werden müssen. Bei 100 Gew.-ppm zulässigem Cl-Gehalt im Lösungsmittel sind stündlich 150 l Lösungsmittel durch den Ionentauscher zu schicken. Bei einer Laufzeit von 1 Woche zwischen zwei Regenerationen (168 Std.) sind ca. 1000 l Anionentauscherharz erforderlich.

In nachfolgender Tabelle sind für einige handelsübliche Anionentauscher Versuchswerte zur Entfernung von Chlorid und Sulfat aus einem Tetraäthylenglykoldialkyläther enthaltenden Lösungsmittel zusammengestellt.

## Tabelle

| Art | Lösungsmittel-volumen bis zum Durchbruch pro 50 ml Harz | Durchbruchs-konzentration | | Nutzbare Kapazität | |
|---|---|---|---|---|---|
| | | Cl (g/l) | SO₄ (g/l) | val/l | % der Hersteller-angaben |
| schwach basisch | 200 | n.b. | n.b. | 0,18 | 16 |
| schwach basisch | 150 | 0,2 | n.b. | 0,13 | 12 |
| mittel basisch | 330 | 0,24 | 0,15 | 0,29 | 26 |
| stark basisch | 250 | 0,57 | n.b. | 0,22 | 20 |
| mittel basisch | 850 | 0,67 | n.b. | 0,75 | ·68 |

Die Tabelle zeigt, daß mit einem mittelbasischen, makroporösen Ionenaustauscher ein Viertel der vom Hersteller angegebenen nutzbaren Volumenkapazität (NVK) erreicht werden kann. Bei Verdünnung des Lösungsmittels mit 10 Gew.-% Wasser (die molare Konzentration steigt hierbei von 39 auf 67%), können 2/3 der NVK erreicht werden. Das Wasser wird in der Regeneriersäule der SO₂-Wäsche wieder entfernt.

Es ist demnach möglich, Chlorid (zusammen mit Sulfat) durch Ionenaustausch aus dem Lösungsmittel zu entfernen.

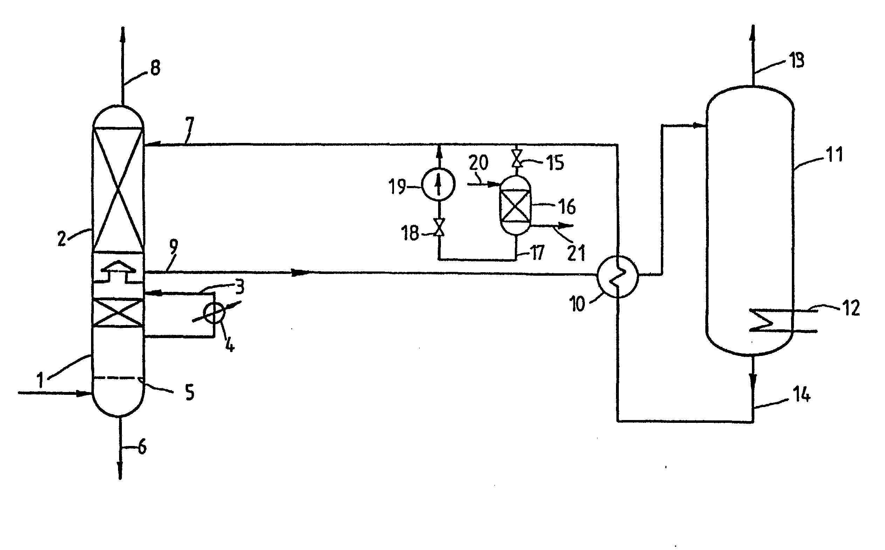

## Patentansprüche

1. Verfahren zur Verhinderung der Korrosion von Apparateteilen durch Säure-Anionen im Zuge der Entfernung von SO₂ aus Abgasen durch Wäsche mit einem physikalisch wirkenden Lösungsmittel, das nach Aufnahme von SO₂ regeneriert und zur Wäsche zurückgeführt wird, dadurch gekennzeichnet, daß die Säure-Anionen mittels eines Ionenaustauschers aus dem Lösungsmittel entfernt werden.

2. Verfahren nach Anspruch 1, dadurch gekennzeichnet, daß ein schwachbasischer Ionenaustauscher verwendet wird.

3. Verfahren nach Anspruch 1 oder 2, dadurch gekennzeichnet, daß die Entfernung der Säure-Anionen in Gegenwart von Wasser durchgeführt wird.

4. Verfahren nach Anspruch 3, dadurch gekennzeichnet, daß die Anionenentfernung in Gegenwart von 10 bis 25 Gew.-% Wasser bezogen auf das Lösungsmittel durchgeführt wird.

5. Verfahren nach einem der Ansprüche 1 bis 4, dadurch gekennzeichnet, daß die Säure-Anionen aus dem regenerierten Lösungsmittel entfernt werden.

6. Verfahren nach einem der Ansprüche 1 bis 5, dadurch gekennzeichnet, daß der Ionentauscher diskontinuierlich zugeschaltet wird.

**Claims**

1. A process for preventing the corrosion of apparatus components by acid anions in the course of the removal of SO₂ from waste gases by washing with a physically active solvent which, after the absorption of SO₂, is regenerated and returned to the wash, characterised in that the acid anions are removed from the solvent by an ion exchanger.

2. A process as claimed in Claim 1, characterised in that a weak-base ion exchanger is used.

3. A process as claimed in Claim 1 or 2, characterised in that the removal of the acid anions is carried out in the presence of water.

4. A process as claimed in Claim 3, characterised in that the removal of the anions is carried out in the presence of 10 to 25% by weight of water relative to the solvent.

5. A process as claimed in one of the Claims 1 to 4, characterised in that the acid anions are removed from the regenerated solvent.

6. A process as claimed in one of the Claims 1 to 5, characterised in that the ion exchanger is connected discontinuously.

**Revendications**

1. Procédé pour empêcher la corrosion de parties d'appareils par des anions acides au cours de l'élimination du SO₂ des gaz d'échappement au moyen d'un lavage par un solvant agissant par voie physique et qui est régénéré après l'absorption du SO₂ et amené au lavage, caractérisé en ce que les anions acides sont éliminés du solvant au moyen d'un échangeur d'ions.

2. Procédé selon la revendication 1, caractérisé en ce que l'on utilise un échangeur d'ions faiblement basique.

3. Procédé selon la revendication 1 ou 2, caractérisé en ce que l'on élimine les anions acides en présence d'eau.

4. Procédé selon la revendication 3, caractérisé en ce que les anions sont éliminés en présence de 10 à 25% d'eau en poids par rapport au solvant.

5. Procédé selon l'une des revendications 1 à 4, caractérisé en ce que les anions acides sont éliminés du solvant régénéré.

6. Procédé selon l'une des revendications 1 à 5, caractérisé en ce que l'échangeur d'ions est raccordé de façon discontinue.